# EUROPEAN PATENT APPLICATION

(11) **EP 4 803 354 A1**
(43) Date of publication of application: **09.09.2026**
(21) Application number: 25774932.5
(22) Date of filing: 07.03.2025
(51) Int. Cl.: B60L 53/66, B60L 53/30, H04W 4/40, H04W 4/80

(54) **ACD-U-BASED SIMULTANEOUS MULTIPLE CHARGING METHOD AND APPARATUS USING SAME**

(30) Priority: 18.03.2024 KR 20240037452; 19.04.2024 KR 20240053001
(71) Applicant: Hyundai Motor Company, Seoul 06797 (KR); Kia Corporation, Seoul 06797 (KR)
(72) Inventor: PARK, Jong Hyeok, Hwaseong-si, Gyeonggi-do 18280 (KR); JOO, Moon Kyung, Hwaseong-si, Gyeonggi-do 18280 (KR); JANG, Jin Su, Hwaseong-si, Gyeonggi-do 18280 (KR)
(74) Representative: Isarpatent
(86) International application number: PCT/KR2025/099615
(87) International publication number: WO 2025/198424

(57) **Abstract**

Disclosed are a simultaneous multiple charging method for an electric vehicle and an apparatus using same. The method comprises the steps of: guiding an electric vehicle entering a charging station to the front of a parking area in which an ACD charger is installed; and positioning the electric vehicle on an automatic power supply device of the ACD charger in the parking area, wherein guidance of the electric vehicle starts on the basis of user information obtained from the electric vehicle side through an eMSP.

## Description

### [Technical Field]

The present disclosure relates to an automatic charging device (ACD)-based simultaneous multiple charging technology of electric mobility, and more particularly, to a method and an apparatus for simultaneous multiple charging between a plurality of electric vehicles and a plurality of ACD chargers.

### [Background Art]

Since an electric vehicle (Electric Vehicle, EV) moves by driving a motor with power of a battery, the electric vehicle generates fewer air pollutants such as exhaust gas compared to a conventional gasoline engine vehicle, has low noise, and is easy in driving operation and maintenance.

An electric vehicle charging system for charging a battery mounted in an electric vehicle basically uses power of a distribution network (grid) of commercial power or an energy storage device. Such an electric vehicle charging system has various forms depending on a type of the electric vehicle.

For example, the electric vehicle charging system has a form of a conductive charging system using a cable or a wireless power transmission system of a non-contact type. In addition, an automatic connection device or an automatic charging device (automatic charging device, ACD) is used for charging the battery of the electric vehicle.

As supply of electric vehicles has recently increased, a situation in which a plurality of electric vehicles simultaneously receive a charging service at an electric vehicle charging station frequently occurs. However, in order for a plurality of electric vehicles to perform simultaneous multiple charging, an appropriate charging algorithm is required for an electric vehicle communication controller or a power supply device communication controller of the charging station. Furthermore, distribution of a charging algorithm for simultaneous multiple charging between a plurality of electric vehicles and a plurality of ACD chargers is still insufficient.

### [Disclosure]

### [Technical Problem]

The present disclosure is intended to provide an effective scheme for simultaneous multiple charging between a plurality of electric vehicles and a plurality of automatic charging device (ACD) chargers, and an object of the present disclosure is to provide an ACD-U (ACD-underbody)-based simultaneous multiple charging method capable of providing a charging sequence for simultaneous multiple charging between a plurality of electric vehicles and a plurality of ACD chargers.

Another object of the present disclosure is to provide an ACD-U-based simultaneous multiple charging method and an apparatus using the same, which may provide a charging sequence and a charging process for each step of effective simultaneous guiding, positioning, pairing, and wireless local area network (wireless local area network, WLAN) connection (association) between a plurality of electric vehicles and a plurality of ACD chargers in a simultaneous multiple charging environment.

Still another object of the present disclosure is to provide an ACD-U-based simultaneous multiple charging method and an apparatus using the same, which may provide a backbone network-based charging structure and a pairing algorithm in a simultaneous multiple charging environment between a plurality of electric vehicles and a plurality of chargers.

### [Technical Solution]

A simultaneous multiple charging method according to one aspect of the present disclosure for achieving the above object is, as a simultaneous multiple charging method of electric mobility by a charging station management system (charging station management system, CSMS) of a backbone network, including guiding electric mobility entering a charging station to in front of a parking region in which an automatic charging device (automatic charging device, ACD) charger is installed; and positioning the electric mobility on an automatic power supply device of the ACD charger within the parking region. The guiding is performed based on user information obtained from an electric mobility service provider (e-mobility service provider, eMSP) from an electric mobility side.

In the simultaneous multiple charging method (hereinafter, briefly referred to as "the method"), the CSMS may independently perform the guiding and the positioning with respect to a plurality of electric mobilities entering the charging station.

The method may further include receiving the user information and vehicle information from the eMSP. The electric mobility may include an electric vehicle (electric vehicle, EV). The user information may include an electric vehicle identification number (electric vehicle identification number, EVID), an electric vehicle communication controller (electric vehicle communication controller, EVCC) identifier (identifier, ID), a UWB (ultra-wideband) EV ID, and an LF (low frequency) EV ID.

The method may further include transmitting the user information to a guide server installed in a parking lot of the charging station.

The method may further include receiving, from the guide server, a state update message for a state update of data related to the electric mobility. The state update message may trigger a guide sequence for the electric mobility.

The method may further include transmitting a guide state request message for the electric mobility to the guide server.

The method may further include transmitting, to an electric vehicle supply equipment (electric vehicle supply equipment, EVSE) of the charging station, information on an ACD charger or a supply equipment communication controller (supply equipment communication controller, SECC) closest to the electric mobility through a UWB guiding result (guiding result) for the electric mobility.

The method may further include transmitting pairing participant information to a plurality of supply equipment communication controllers (supply equipment communication controller, SECC) respectively provided in the ACD charger through websocket communication.

A simultaneous multiple charging method according to another aspect of the present disclosure for achieving the above object is, as a simultaneous multiple charging method of electric mobility by a guiding server installed in a charging station, including guiding electric mobility entering the charging station to in front of a parking region in which an automatic charging device (automatic charging device, ACD) charger is installed; and positioning the electric mobility on an automatic power supply device of the ACD charger within the parking region. The guiding is started by a guide state request message received from a charging station management system (charging station management system, CSMS) of a backbone network.

In the method, the electric mobility may include an electric vehicle (electric vehicle, EV). The guide state request message may include a UWB (ultra-wideband) EV ID (identifier). The UWB EV ID may be included in a packet for processing a state request and a response between an EV and an ACD charger in a UWB-based guiding system.

The method may further include verifying the UWB EV ID included in the guide state request message.

The method may further include guiding the electric mobility by communicating with an infrastructure anchor or a guide anchor installed in the parking region. The guide anchor may include an infrastructure-side UWB device. The infrastructure-side UWB device may guide the electric mobility to in front of a specific parking region in cooperation with an EV-side UWB device.

The method may further include transmitting a guide state response message to the charging station management system (charging station management system, CSMS) of the backbone network. The guide state response message may include state information on a progress state of a current guide sequence for the electric mobility.

The method may further include receiving, from the CSMS, a guide state request message having the same UWB EV ID; and transmitting, to the CSMS, a guide state response message including state information on a progress state of the current guide sequence.

The method may further include transmitting, to the CSMS, a state message on completion of a guide sequence for the electric mobility. The CSMS may transmit pairing participant information to a plurality of supply equipment communication controllers (supply equipment communication controller, SECC) respectively provided in the ACD charger through websocket communication.

An apparatus using a simultaneous multiple charging method according to still another aspect of the present disclosure for achieving the above object is, as an apparatus using a simultaneous multiple charging method of electric mobility, including a transceiver configured to perform websocket communication with a charging station management system (charging station management system, CSMS); and a processor connected to the transceiver. The processor receives a guide state request message from the CSMS, starts guiding of electric mobility entering a charging station based on a UWB (ultra-wideband) EV ID (identifier) in the guide state request message, guides the electric mobility to in front of a parking region in which an automatic charging device (automatic charging device, ACD) charger is installed, and positions the electric mobility on an automatic power supply device of the ACD charger within the parking region.

The apparatus may further perform guiding the electric mobility by communicating with an infrastructure anchor or a guide anchor installed in the parking region. The electric mobility may include an electric vehicle (electric vehicle, EV). The guide anchor may include an infrastructure-side UWB device. The infrastructure-side UWB device may guide the electric mobility to in front of a specific parking region in cooperation with an EV-side UWB device.

The processor may further perform transmitting a guide state response message to the CSMS, receiving, from the CSMS, a guide state request message having the same UWB (ultra-wideband) EV ID (identifier), and transmitting, to the CSMS, a guide state response message including state information on a progress state of a current guide sequence. The UWB EV ID may be included in a packet for processing a state request and a response between an EV and an ACD charger in a UWB-based guiding system.

The processor may further perform transmitting, to the CSMS, a state message on completion of a guide sequence for the electric mobility. The CSMS may transmit pairing participant information to a plurality of supply equipment communication controllers (supply equipment communication controller, SECC) respectively provided in the ACD charger through websocket communication.

The guiding of the electric mobility may be performed based on user information transmitted to the CSMS through an electric mobility service provider (e-mobility service provider, eMSP) from an electric mobility side.

### [Advantageous Effects]

According to the present disclosure, an effective charging sequence for simultaneous multiple charging between a plurality of electric vehicles and a plurality of ACD chargers may be provided based on an ACD-U (automatic charging device-underbody) in which an automatic power supply device is docked at a lower portion of an electric vehicle.

In addition, according to the present disclosure, a charging sequence and a charging process for each step of effective guiding, positioning, pairing, and wireless local area network (wireless local area network, WLAN) connection (association) between a plurality of electric vehicles and a plurality of ACD chargers in a simultaneous multiple charging environment may be provided.

In addition, according to the present disclosure, a backbone network-based charging structure and an automatic charging algorithm in a simultaneous multiple charging environment between a plurality of electric vehicles and a plurality of chargers may be provided, and through this, service efficiency for simultaneous multiple charging for electric mobility such as electric vehicles, autonomous vehicles, etc., may be increased and user convenience may be improved.

### [Description of Drawings]

FIG. 1 is a block diagram for explaining a charging structure for backbone network-based multiple (N to M) charging, including an apparatus using a simultaneous multiple charging method according to exemplary embodiments of the present disclosure.
FIG. 2 is a block diagram illustrating details of the backbone network-based multiple charging structure of FIG. 1.
FIG. 3 is a flowchart of a guiding sequence that may be employed in a simultaneous multiple charging method according to exemplary embodiments of the present disclosure.
FIG. 4A and FIG. 4B are flowcharts illustrating a guiding-pairing algorithm that may be employed in a simultaneous multiple charging method according to exemplary embodiments of the present disclosure.
FIG. 5 is a sequence diagram for explaining an overall guiding-pairing sequence that may be employed in a simultaneous multiple charging method according to exemplary embodiments of the present disclosure.
FIG. 6 is a schematic block diagram of an apparatus using a simultaneous multiple charging method according to another exemplary embodiment of the present disclosure.
FIG. 7 is an exemplary diagram for explaining a multiple charging method of a comparative example.
FIG. 8 is an exemplary diagram for explaining an operating environment of a simultaneous multiple charging method according to exemplary embodiments of the present disclosure.
FIG. 9 is an exemplary diagram for explaining another operating environment of a simultaneous multiple charging method according to exemplary embodiments of the present disclosure.
FIG. 10 to FIG. 14 are exemplary diagrams for explaining a guiding sequence that may be employed in a simultaneous multiple charging method according to exemplary embodiments of the present disclosure.
FIG. 15 to FIG. 17 are exemplary diagrams for explaining a positioning sequence that may be employed in a simultaneous multiple charging method according to exemplary embodiments of the present disclosure.
FIG. 18 and FIG. 19 are exemplary diagrams for explaining an introduction part of a pairing sequence that may be employed in a simultaneous multiple charging method according to exemplary embodiments of the present disclosure.
FIG. 20 is a conceptual block diagram of an apparatus using a simultaneous multiple charging method according to still another exemplary embodiment of the present disclosure.

### [Best mode of the Invention]

In addition to the above objects, other objects and features of the present disclosure will become apparent through the description of exemplary embodiments with reference to the accompanying drawings.

The present disclosure may be variously modified and may have various exemplary embodiments, and specific exemplary embodiments are illustrated in the drawings and described in detail. However, this is not intended to limit the present disclosure to specific embodiments, and it should be understood that all modifications, equivalents, and substitutes included in the spirit and scope of the present disclosure are included.

Terms such as first, second, A, B, etc., may be used to describe various components, but the components should not be limited by the terms. The terms are used only for the purpose of distinguishing one component from another component. For example, a first component may be named a second component without departing from the scope of the present disclosure, and similarly, a second component may also be named a first component. The term "and/or" includes any combination of a plurality of related listed items or any of a plurality of related listed items.

In exemplary embodiments of the present application, "one or more of A and B" may mean "one or more of A or B" or "one or more of combinations of A and B." In addition, in exemplary embodiments of the present application, "one or more of A and B" may mean "one or more of A or B" or "one or more of combinations of A and B."

When a component is referred to as being "connected to" or "coupled to" another component, the component may be directly connected to or coupled to the other component, but it should be understood that another component may exist therebetween. On the other hand, when a component is referred to as being "directly connected to" or "directly coupled to" another component, it should be understood that another component does not exist therebetween.

Terms used in the present application are used only to describe specific exemplary embodiments and are not intended to limit the present disclosure. A singular expression includes a plural expression unless the context clearly indicates otherwise. In the present application, terms such as "include" or "have" are intended to designate that features, numbers, steps, operations, components, parts, or combinations thereof described in the specification are present, and should be understood as not precluding the presence or addition of one or more other features, numbers, steps, operations, components, parts, or combinations thereof.

Unless otherwise defined, all terms used herein including technical or scientific terms have the same meanings as those generally understood by a person having ordinary skill in the art to which the present disclosure belongs. Terms defined in commonly used dictionaries should be interpreted as having meanings consistent with meanings in the context of the related art, and should not be interpreted in an ideal or excessively formal sense unless clearly defined in the present application.

Meanwhile, even though a technology known before a filing date of the present application may be included as a part of a configuration of the present disclosure as necessary, the technology is described in the present specification within a scope not obscuring the gist of the present disclosure. However, in describing the configuration of the present disclosure, detailed description of matters that can be easily understood by a person skilled in the art as a technology known before the filing date of the present application may obscure the gist of the present disclosure, and thus excessively detailed description of the known technology is omitted.

For example, technologies such as performing setup, communication connection (association), pairing, localization, positioning, docking/undocking control, or transmitting and receiving information required to perform each process before performing charging of an electric vehicle using a communication technology operating in a single layer or a specific layer while using mobile communication technologies such as Wi-Fi or 5G, etc., may use known technologies prior to filing of the present disclosure, and at least a part of such known technologies may be applied as elemental technologies required to implement the present disclosure. That is, the present disclosure is not intended to claim rights to known technologies, and contents of the known technologies may be included as a part of the present disclosure within a scope not departing from the spirit of the present disclosure.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in vehicle (PV)": An electric vehicle rechargeable via wireless charging from an electric vehicle supply equipment (EVSE) without using a physical plug or a physical socket.

"Plug-in Electric Vehicle (PEV)": An Electric Vehicle that recharges the on-vehicle primary battery by connecting to the power grid.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Information interoperability": An ability of two or more of networks, systems, devices, hardware, communication protocols, applications, or components to share information securely and effectively and to easily use the information with little or no inconvenience to a user.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Ground assembly (GA)" or "Supply Power Circuit (SPC): An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"Vehicle assembly (VA)" or "EV power circuit (EVPC)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like. The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

"Smart grid": A system implemented in which power plants, power generation units, and energy storage systems are connected in an intelligent manner through network facilities so as to exchange messages based on information and communication technologies.

"OEM (original equipment manufacturer)" may include an electric vehicle manufacturer or a server operated by the electric vehicle manufacturer, and may further include a root certificate authority (CA) or a root certificate server that issues OEM root certificates.

"Charging station (CS)" may refer to a facility that includes one or more EV power supply devices and actually performs charging for electric vehicles (EVs). "Charging station" may include at least one ground assembly and at least one ground assembly controller that manages the ground assembly. The ground assembly may include at least one wireless communicator. "Charging station" may refer to a location, such as a home, office, public space, roadside, or parking lot, that includes at least one ground assembly.

"Charging Station Operator (CSO)": An entity that manages electricity to provide the requested energy transfer service, and may be synonymous with "Charge Point Operator (CPO)".

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Charge Service Provider (CSP)": An entity responsible for managing and authenticating EV user credentials, billing, and providing other value-added services to customers, and can be considered a specific type of Mobility Operator (MO) and may also be implemented as an integrated entity with an MO.

"Mobility Operator (MO)": A service provider that enters into contractual relationships with electric vehicle (EV) owners concerning charging, authorization, and payment, enabling EV drivers to charge their vehicles at charging stations.

E-Mobility Provider (EMP), E-Mobility Service Provider (EMSP), and Mobility Service Provider (MSP) may be used with similar meanings to the mobility operator.

"Clearing House (CH)": An entity that handles cooperation among MOs, Charging Service Providers (CSPs), and Charging Station Operators (CSOs), and in particular, may serve as an intermediary that facilitates authorization, billing, and settlement procedures related to EV charging service roaming between two settlement parties.

"Roaming": A scheme and the associated exchange of information and provisions that allow EV users to access charging services provided by multiple CSPs or CSOs across different mobility networks using a single credential and contractual agreement.

"Credential": A physical or digital asset representing the personal identity of an EV or its owner, and may include cryptographic information used to verify identity, such as passwords, public/private key pairs used in public-key cryptographic algorithms, public key certificates issued by a certification authority, and information related to a trusted root certification authority.

"Certificate": An electronic document that binds a public key to an identity through a digital signature.

"Service Session": A set of EV charging services at a charging point, assigned to a customer within a defined timeframe and identified by a unique identifier.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy obtained by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. "E-Mobility Account Identifier (EMAID)" may refer to a unique contract certificate issued for each legal agreement concluded between a mobility operator and a customer for electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to activate a user-friendly mechanism to perform the authentication, authorization, and payment without requiring additional user interaction at the charging station.

Electric vehicles may be integrated into the smart grid to provide a flexible load control and valuable grid services without compromising driver habits. In order to avoid the need for additional grid components to supply power to peak power demands arising from highly variable load fluctuations, the energy of the electric vehicles may be considered as one of the energy sources in the smart grid. In addition, it may be considered to provide appropriate incentives to electric vehicles for the expansion of the smart grid, so that the smart grid may encourage the generation and use of the renewable energy in the long term.

A Vehicle-to-Grid Transfer Protocol (V2GTP) of the OSI 5 layer may be basically understood as a session wrapper for application layer messages. The application layer messages at this time may be referred to as so-called V2G messages. The V2GTP may include definitions on a header and a payload to enable an efficient classification and processing of the V2G messages.

An autoconnect charging device or automatic charging device (ACD) may be implemented based on contents specified in ISO/IEC 15118 Edition 2 or ISO 15118-20 to perform at least a part of a charging process by controlling a robot or an automated device through wireless communications. The ACD may include automated connection device.

Several types of ACD technologies including an ACD of underbody connection type (ACD-U), an ACD of sidearm connection type (ACD-S), and an ACD of pantograph (ACD-P) type have been proposed based on a direction in which the ACD equipment on the EVSE side approaches the electric vehicle and/or a location of the ACD equipment on the EVSE side with respect to the electric vehicle, and additional ACD types may be included in the future as the wired or wireless charging technologies advances.

An ACD charging communication method described hereinbelow may be configured to define a new namespace, change message parameters, change a message sequence, and utilize docking, undocking, and pairing mechanisms in ACD charging communications over a wireless LAN (WLAN) according to ISO 15118 standard.

In addition, the ACD charging communication method may be configured to define a VSE additional information parameter for the ACD-U or the ACD-S. "Vendor specific element (VSE)" may refer to a data format that contains information on a type of an EVSE available at a current location in ISO 15118-based communications.

In the present specification, a charging sequence may refer to an order of events occurring in a charging process for charging an electric vehicle, such as guiding or guiding-pairing, positioning, pairing, etc. Each event of the order of events may also be expressed as a detailed sequence. The charging process may refer to a technical procedure and/or a physical procedure required for charging an electric vehicle and an operation method thereof.

In the following description of a vehicle, for convenience of description, the term "electric vehicle (EV)" is used, but the present disclosure may be applied to various types of electric mobility capable of traveling using electric energy. For example, electric mobility may refer to not only mobility traveling solely using electric energy but also various types of hybrid electric mobility capable of using other energy sources together.

Even in a case of targeting various electric mobility, expressions such as an electric vehicle supply equipment (EVSE) may conventionally refer to a device supplying electric energy, and expressions such as an electric vehicle communication controller (EVCC) may refer to a controller performing electronic communication and control in electric mobility.

The present exemplary embodiments describe a charging sequence and a wireless local area network (WLAN association) method that may be used in a simultaneous multiple charging environment between a plurality of electric vehicles and a plurality of chargers. Simultaneous multiple charging may refer to a structure in which guiding, positioning, pairing, or charging procedures may be performed in a multiple manner for a plurality of EVs and a plurality of ACDs. The present exemplary embodiments described below are described mainly with respect to a backbone network-based simultaneous multiple charging structure, but are not limited thereto.

Hereinafter, preferred exemplary embodiments of the present disclosure will be described in more detail with reference to the accompanying drawings. In describing the present disclosure, identical reference numerals are used for identical components in the drawings in order to facilitate overall understanding, and redundant descriptions of identical components are omitted.

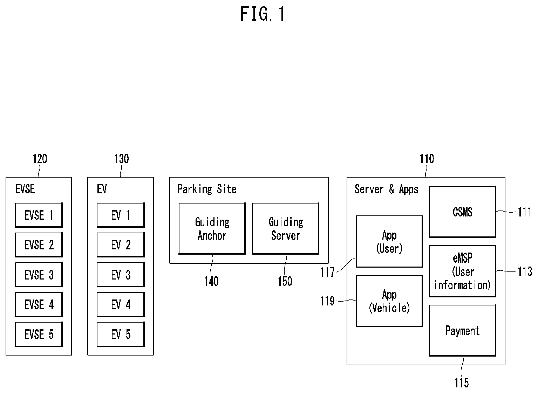

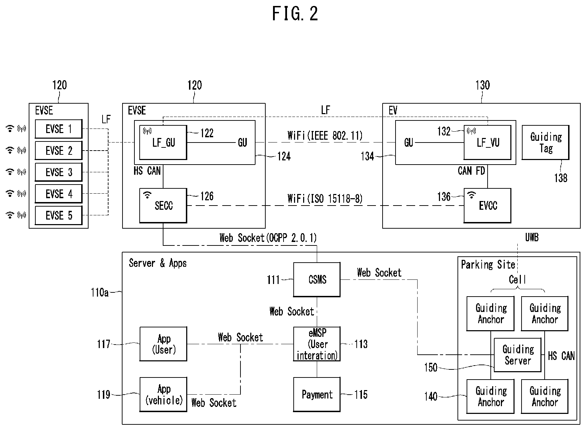

FIG. 1 is a block diagram for explaining a charging structure for backbone network-based multiple (N to M) charging, including an apparatus using a simultaneous multiple charging method according to exemplary embodiments of the present disclosure. FIG. 2 is a block diagram illustrating details of the backbone network-based multiple charging structure of FIG. 1.

As shown in FIG. 1 and FIG. 2, a charging structure for simultaneous multiple charging includes a backbone network 110, an electric vehicle supply equipment (EVSE, 120), an electric vehicle (EV, 130), and a guide unit installed in a parking site.

The backbone network 110 is connected to the EVSE 120 or the EV 130 through a network to perform communication and includes a server and applications (apps) that are responsible for functions such as charging infrastructure, user information, charging communication, authentication/authorization, etc. The server may include a server for a driver and a server for infrastructure. The backbone network 110 may also be abbreviated as a "backbone server" including one or more of the components.

The backbone network 110 may include a charging station management system (CSMS, 111), an electric mobility service provider (eMSP, 113) that provides an EV charging service and related digital services to a user, a payment processor 115 including a server and/or applications for payment, a user application (App(user), 117), and a vehicle application (App(vehicle), 119).

Describing each component of the backbone network 110 in more detail, the CSMS 111 may include a server that controls start and/or end of each step sequence of guiding, positioning, and pairing. The eMSP 113 may include a server that performs a function of storing user information to provide an EV charging service and related digital services. The payment processor 115 may include a server that processes charging fee payment and other billing-related services. The user application 117 is an application capable of controlling EV charging through a personal device such as a mobile phone of a driver. The vehicle application 119 is an application on an EV side that allows a driver to control charging. Data transmission and reception between the CSMS 111 and the eMSP 112 and data transmission and reception between the eMSP 112 and the vehicle application 117 and the user application 119 may be performed through websocket communication.

The EVSE 120 may include a first EVSE (EVSE 1) to a fifth EVSE (EVSE 5). The first EVSE to the fifth EVSE may be configured to perform LF communication with each other. Each EVSE of the EVSE 120 may include, as shown in FIG. 2, a low frequency ground unit (LF_GU, 122), a ground unit (GU, 124), and a supply equipment communication controller 126. Such an EVSE 120 may be referred to as a sixth EVSE in distinction from the first EVSE (EVSE 1) to the fifth EVSE (EVSE 5).

The LF_GU 122 is an LF transponder that generates an LF link (low frequency link) between an electric vehicle and an ACD charger. The LF_GU 122 may be used for verification of an ACD charger and ACD charger matching in short-range real-time ranging and pairing processes for WLAN association transfer. The GU 124 is a ground device indicating an ACD structure on an infrastructure side. The GU 124 may mount the LF_GU 122 and may be disposed at a predetermined position within a parking region. The SECC 126 is a charging control unit or a communication controller on an ACD charger side. An operation of the SECC 126 may be based on charging sequences of international standards ISO 15118-2 and ISO 15118-20. The LF_GU 122 and the SECC 126 described above may be connected through a high speed CAN (controller area network) interface.

The EV 130 may include a first EV (EV 1) to a fifth EV (EV 5). Each EV of the EV 130 may include, as shown in FIG. 2, a low frequency vehicle unit (LF_VU, 132), a vehicle unit (VU, 134), an electric vehicle communication controller (EVCC, 136), and a guiding tag 138.

The LF_VU 132 is an LF transponder that generates an LF link between an electric vehicle and an ACD charger. The LF_VU 132 may be used for verification of an ACD charger and ACD charger matching in short-range real-time ranging and pairing processes for WLAN association transfer. The VU 134 refers to a vehicle device indicating an ACD structure on an EV side. The VU 134 may embed or include the LF_VU 132 and may be attached to a front end or a rear end of a lower portion of a vehicle. The EVCC 136 may be a charging control unit or a communication controller on an EV side. An operation of the EVCC 136 may be based on charging sequences based on international standards ISO 15118-2 and ISO 15118-20. The guiding tag 138 forms a UWB link with an anchor in an ultra-wideband cell of an infrastructure and performs a role of a guide anchor and may be used for middle-distance real-time ranging. The LF_VU 132 and the EVCC 136 described above may be connected through a CAN FD (CAN with flexible data rate) communication interface.

The guide unit includes a guiding anchor 140 and a guiding server 150. As shown in FIG. 2, the guiding anchor 140, which is a parking site-side component, may be configured as an anchor set including four anchors for each unit parking region. The guiding anchor 140 forms a UWB link with the guiding tag 138. The anchor set may be referred to as a cell or a UWB cell. The guiding server 150 is a server that controls cooperative control for long-middle distance real-time ranging. The guiding anchors 140 and the guiding server 150 described above may be configured to communicate with each other through HS CAN.

In the present exemplary embodiments, the ACD charger may refer to a charger such as an electric vehicle supply equipment (EVSE) that is automatically connected to an electric vehicle or a charging system without manual manipulation to perform wired and/or wireless charging.

The LF_GU 122 and the LF_VU 132 described above may be configured to communicate using low frequency (LF). The GU 124 and the VU 134 may be configured to communicate through a WiFi network supporting a standard protocol of IEEE 802.11. The SECC 126 and the EVCC 136 may be configured to communicate through a WiFi network supporting ISO 15118-8 standard communication. The SECC 126 and the CSMS 111 may be configured to support websocket communication. The CSMS 111 and the guiding server 150 may be configured to support websocket communication. The websocket may use an open charge point protocol (OCPP). The OCPP may include OCPP 1.6 or OCPP 2.0.1. The cell including the guiding anchors 140 and the guiding tag 138 may transmit and receive data through a UWB communication scheme.

In the present exemplary embodiments, the backbone network 110a may be implemented to further include guide units disposed in a parking site in a broad sense (see FIG. 2).

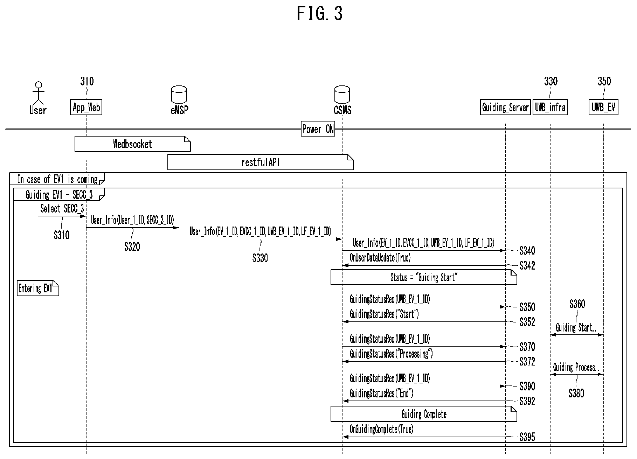

FIG. 3 is a flowchart of a guiding sequence that may be employed in a simultaneous multiple charging method according to exemplary embodiments of the present disclosure.

As shown in FIG. 3, a backbone network-based simultaneous multiple charging method performs charging of a plurality of electric vehicles simultaneously by connecting a plurality of electric vehicles and a plurality of ACD chargers as a plurality of pairs, and includes a charging triggering sequence, a guiding sequence, a pairing sequence, and a positioning sequence. The pairing sequence may refer to a guiding-pairing sequence. In addition, the simultaneous multiple charging method of the present exemplary embodiments may further include an error processing sequence for an error that does not satisfy a preset condition.

An apparatus using the simultaneous multiple charging method may be briefly referred to as "SMCA" indicating a simultaneous multiple charging apparatus. The SMCA includes one or more of a web application (application_web, app_web) 310 of a user, an eMSP, a CSMS, a guiding server, a UWB infrastructure device 330, or a UWB electric vehicle device 350. The user may be referred to as a driver.

The app_web 310 may refer to an application including a web interface or a web-based API interworking application. The UWB infrastructure device 330 may refer to a UWB device on an EVSE side or a backbone network side, such as a guiding anchor, etc. The UWB electric vehicle device 350 may refer to a UWB device on an electric vehicle side, such as a guiding tag, etc.

In the present exemplary embodiments, the guiding sequence refers to a procedure of guiding a vehicle from an entrance of a charging station to a location or a parking space in which an ACD charger is located. For this purpose, a UWB link between an EV and an ACD charger may be formed. Information exchange for UWB link establishment may be performed through a backbone server. Accordingly, necessary components and infrastructure/EV information may be regarded as already known values, and a guiding procedure may be performed based on the information. Such a guiding sequence may be compatible with both a case in which a driver directly drives and a case in which autonomous driving is integrated.

In order to start the guiding sequence, a manual trigger of a driver or an automatic guide trigger by autonomous driving is required. The SMCA of the present exemplary embodiments may be configured to perform a guide trigger role based on an input or detection of any one of the following signals or events.
- a manual signal of a driver through an application of personal communication equipment (briefly referred to as "app")
- a manual signal of an EV through an EV-mounted app
- an automatic signal by backbone servers
- an automatic signal by an autonomous driving controller

Upon receiving one of the above-described guide trigger signals, the backbone server or the CSMS may automatically start the guiding sequence and may monitor a real-time position of an EV based on an ACD charger or ACD chargers in a charging station. Similarly, a driver may monitor a real-time position of an EV based on an ACD charger or ACD chargers in the charging station through a vehicle terminal or a user terminal connected to the backbone server or the CSMS. The charging station refers to a place in which a plurality of ACD chargers are arranged, and may include a public use and/or a business use.

In a simultaneous multiple charging environment of the present exemplary embodiments, based on components of the SMCA being in a power on state, the App_web 310 and the eMSP may perform websocket communication. The eMSP and the CSMS are connected by a RESTful API and may operate independently. The RESTful API refers to a web API that follows a representational state transfer (REST) principle.

Based on an electric vehicle (referred to as "EV1") of a user (referred to as "user_1") entering a service region of a charging station, the CSMS may guide EV1 based on user information obtained from the eMSP storing the user information.

A specific example of the guiding sequence is as following 1. through 8.
1. An ACD charger may be directly selected by a user through a terminal in step S310. The selected ACD charger may be, for example, a third SECC (SECC_3).
2. An application (App) mounted in the terminal may transmit a user identifier (USER ID) and a number or an identifier of the selected SECC to the eMSP in step S320.
   That is, based on a user selecting a specific SECC, for example, a third SECC (SECC_3), in a communication terminal mounted in an electric vehicle or a portable device, the app_web 310 that is an application of the communication terminal or the vehicle may transmit user information (user_info) to the eMSP. The user information (hereinafter, referred to as "basic user information") may include a user identifier (user_1_ID) and a third SECC identifier (SECC_3_ID).
3. The eMSP may transmit previously stored user information to the CSMS based on the basic user information in step S330. The previously stored user information may include a configuration required for UWB guiding and encrypted personal information.
   That is, the following data included in the user information may be transmitted from the eMSP to the CSMS:
   - EVID (electric vehicle identification number): the EVID may be used to identify a vehicle and retrieve information corresponding to the vehicle.
   - EVCC ID: the EVCC ID is one of information corresponding to a vehicle. The EVCC ID may be used in pairing and a WLAN connection stage of an SECC.
   - UWB EV ID: the UWB EV ID may be an ID of a UWB tag on an EV side communicating with a UWB anchor on an infrastructure side. The UWB EV ID is transmitted to a guiding server so that an anchor cell of guiding anchors may know in advance which guiding tag communicates.
   - LF EV ID: the LF EV ID may be an ID of an LF transponder on an EV side communicating with an LF transponder on an infrastructure side. The LF EV ID is transmitted to an SECC so that an LF transponder on an EV side may know which LF antenna transmits information.
4. The CSMS may receive the information transmitted from the eMSP in the third step in step S330.
5. The CSMS may transmit the user information to a guiding server in step S340. Based on a result of checking the received user information or comparing with previously stored information, when an event for updating user information occurs for EV charging, the guiding server may control the CSMS to trigger a guiding sequence. For this purpose, the guiding server may transmit a signal or a message (OnUserDataUpdata(True)) for a state update of EV or user data to the CSMS in step S342.
6. Based on the guiding sequence being triggered (Status="Guiding Start"), the CSMS may transmit a guiding status request (GuidingStatusReq) message to the guiding server to start EV guiding.
   - The guiding status request message may include a UWB EV ID (for example, "UWB_EV1_ID") in an SP0 (service packet optimization or secure packet optimization) packet. The UWB EV ID may be expressed as an EV UWB ID. The SP0 packet may refer to a packet that processes a state request and a response between a vehicle and an ACD charger in a UWB-based guiding system.
   - The guiding server may verify the transmitted UWB EV ID. Based on successful verification, the guiding server may proceed with guiding by communicating with an infrastructure anchor and may transmit a guiding status response (GuidingStatusRes) message to the CSMS in step S352. The guiding server may transmit the guiding status response message including "Start" indicating a progress state of a current guiding sequence to the CSMS. The infrastructure anchor corresponds to a guiding anchor. A progress state of the guiding sequence may include one of state information of start, processing, or end.
   - A UWB infrastructure device 330 may start guiding with a UWB EV device 350 based on a progress state of the guiding sequence of the guiding server in step S360. That is, the guiding server controls an operation of the UWB infrastructure device 330, and the UWB infrastructure device 330 may guide an EV to in front of a specific parking region in cooperation with a UWB EV device.
7. Similarly to the sixth step, the CSMS transmits a guiding status request (GuidingStatusReq) message having the same UWB EV ID to the guiding server in step S370, and may receive a response message including "processing" information for a case in which ranging is in progress from the guiding server in step S372.
   - The UWB infrastructure device 330 may proceed with a guiding process with the UWB EV device 350 based on a current guiding sequence progress state "processing" of the guiding server in step S380.
8. Based on reaching within a specific threshold during continuous ranging, the guiding server may request termination of the guiding sequence by transmitting, to the CSMS, a response including "End" to a guiding status request message of the CSMS in step S392.
   - Based on the guiding sequence being completed, the guiding server may transmit a state message (OnGuidingComplete(True)) for completion of the guiding sequence to the CSMS in step S395.

Based on the guiding sequence being completed, a pairing process may be started. Meanwhile, based on an error occurring, a charging sequence may enter a reset step or a restart step in order to process the error.

In the following exemplary embodiments, a detailed description of a pairing mechanism and an error processing scheme for a case in which pairing fails or a condition is not satisfied are addressed. Based on guiding being completed based on a UWB link between an EV and an ACD charger, a pairing process between an EVCC of the EV and an SECC of the ACD charger is started. Reliability of pairing may be ensured through two conditions of EVCC ID (EVCCID) comparison and distance comparison.

For EVCCID comparison, an access point (AP) maintains a list of known MAC addresses of a plurality of connectable EVCCs. The AP may allow connection only to an EVCCID included in the list.

For distance comparison, the CSMS may provide information on a closest ACD charger to an EVSE through a UWB guiding result. In a case of middle- and long-distance UWB ranging, measurement may be performed with an error range within 1 m. Accordingly, LF short-range ranging may be integrated. In addition, based on a closest ACD charger derived from a guiding result matching an LF ranging result, the CSMS may perform verification of confirming whether a UWB ranging result matches the guiding result.

Scanning may be divided into active scanning and passive scanning. Passive scanning may include continuously and periodically broadcasting a beacon frame by an access point (AP) near a station (STA). Such a beacon frame may overlap with a frame of another AP, and due to this, frequency interference may occur and a pairing process may become difficult. Accordingly, in the present exemplary embodiments, active scanning is adopted and used. Active scanning may refer to a method in which a station or an EV actively searches for a connectable ACD charger by transmitting a probe request message to an ACD charger or an AP to be connected.

Such an approach of active scanning not only reduces a wireless interference problem related to passive scanning but also allows faster connection because a station designates an AP to be connected. As a result, an effect of reducing a waiting time for WLAN connection (association) may be provided to an EV driver.

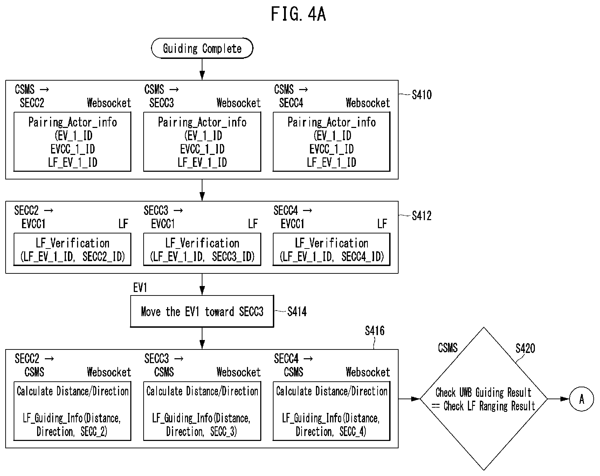

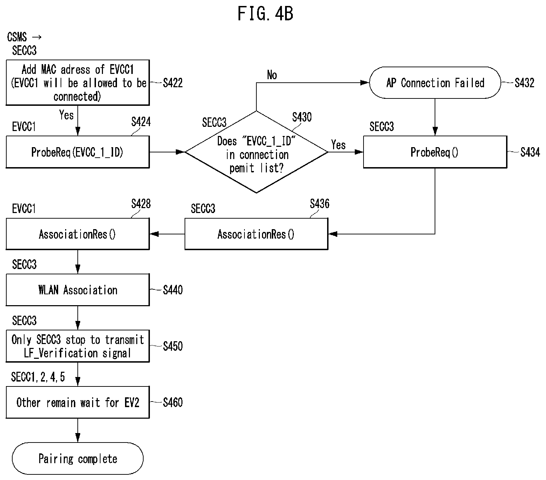

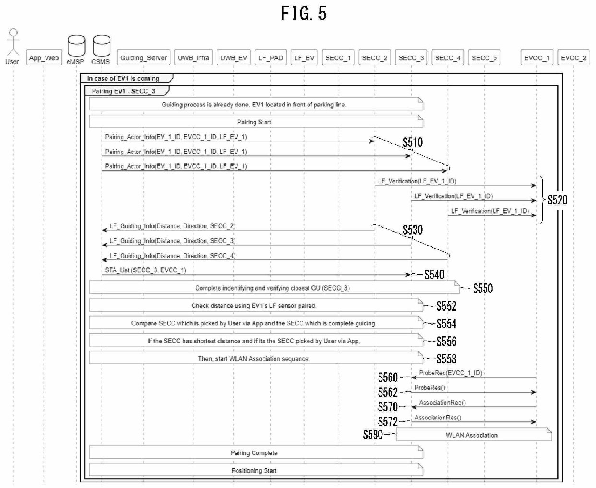

The above-described pairing algorithm is described with reference to FIG. 4A, FIG. 4B, and FIG. 5.

FIG. 4A and FIG. 4B are flowcharts illustrating a guiding-pairing algorithm that may be employed in a simultaneous multiple charging method according to exemplary embodiments of the present disclosure.

In the present exemplary embodiments, the simultaneous multiple charging method is configured to perform a pairing (guiding-pairing) procedure in which a specific EV and a specific ACD charger exchange signals or data required to perform a guiding sequence among a plurality of electric vehicles and a plurality of ACD chargers.

In the simultaneous multiple charging method, an SECC transmits an LF burst to guide an EV. The SECC may be a communication controller in an ACD charger. The EV moves through UWB guiding. The CSMS determines a most appropriate SECC. An EVCC performs WLAN connection (association) with the SECC to be connected. The SECC compares LF and UWB authentication data to perform verification, processes pairing completion based on matching, and processes pairing retry based on mismatch, or switches to another SECC based on a preset order.

Referring to FIG. 4A and FIG. 4B in more detail, based on guiding being completed, the CSMS transmits pairing participant information (pairing actor information, Pairing_Actor_info) to SECC1, SECC2, SECC3, SECC4, SECC5, etc., respectively provided in a plurality of ACD chargers through websocket communication in step S410. The pairing participant information is information on an EV side (that is, EV1) that has entered a charging station for using a charging service, and may include an EV ID, an EVCC ID, and an LF EV ID.

Each of SECC2, SECC3, and SECC4 may transmit an LF burst and may perform LF verification and EV position confirmation in step S412. A request and a response for LF verification may include an LF EV ID and an SECC ID. In this process, a UWB-based guiding result may be generated.

Next, EV1 may move toward a specific SECC (that is, SECC3) in step S414.

Based on EV1 moving toward SECC3, each of SECC2, SECC3, and SECC4 may calculate a distance and a direction with respect to EV1 based on LF verification and a UWB guiding signal in step S416. The LF verification and the UWB guiding signal may include LF guiding information (LF_Guiding_Info). The LF guiding information may include a distance, a direction, and an SECC number.

Next, the CSMS may check a UWB guiding result, check an LF guiding result, and determine whether the UWB guiding result is substantially identical to the LF guiding result in step S420. The CSMS may determine or select an optimal SECC by analyzing the UWB guiding result and the LF guiding result. In the present exemplary embodiments, the CSMS may select SECC3 for a charging service for EV1 at a specific time point.

Next, the CSMS may check a MAC address of SECC3 and a MAC address of EVCC1. The CSMS may add the MAC address of EVCC1 to a list in step S422. The list may refer to a connection permit list, a connectable EVCC list, etc. For example, connection of EVCC1 to SECC3 through an AP may be permitted.

Next, EVCC1 may transmit a probe request (ProbeReq) message to attempt connection with SECC3 in step S424. The probe request may include an EVCC ID (EVCC_1_ID).

Next, SECC3 may determine whether the EVCC1 ID (EVCC_1_ID) for which a connection is requested is in a connection permit list in step S430.

Based on the EVCC1 ID not being in the connection permit list, for example, based on a MAC address not matching, SECC3 may display an AP connection failed (AP connection failed) message in step S432.

Based on the EVCC1 ID being in the connection permit list or based on displaying the AP connection failed message, SECC3 may transmit a probe response (ProbeRes) message to EVCC1 in step S434. Information included in a probe response message in a case in which the EVCC1 ID is in the connection permit list and information included in a probe response message after displaying the AP connection failed message may be different from each other.

Next, based on confirming that the EVCC1 ID is in the connection permit list and transmitting the probe response message to EVCC1, SECC3 transmits an association request (AssociationReq) message to EVCC1 in step S436, receives an association response (AssociationRes) message from EVCC1 in step S438, and may be connected to EVCC1 through WLAN association in step S440.

Based on WLAN connection being successful, SECC3 may stop transmitting an LF verification signal in step S450. At this time, other SECCs (SECC1, SECC2, SECC4, SECC5) may maintain a standby state by waiting for another EV (EV2) in step S460.

Through the above-described process, pairing between an EVCC of a specific EV and an SECC of a specific ACD charger may be completed (Pairing Complete). Based on pairing being completed, SECC3 may compare a UWB guiding value and an LF verification result to confirm whether connection is established with a correct EVCC (EVCC1).

Meanwhile, based on the EVCC1 ID not being in the connection permit list or based on a MAC address of EVCC1 not matching, SECC3 may display an "AP Connection Failed" message, retransmit a probe request message, and based on failure occurring again even though retry is performed, may switch to another SECC to attempt connection.

FIG. 5 is a sequence diagram for explaining an overall guiding-pairing sequence that may be employed in a simultaneous multiple charging method according to exemplary embodiments of the present disclosure.

An apparatus using the simultaneous multiple charging method of the present exemplary embodiments (briefly referred to as "SMCA") may include one or more of a CSMS, a guiding server (guiding server), a UWB infrastructure device (UWB_Infra), a UWB EV device (UWB_EV), an LF pad (LF_PAD), an LF EV (LF_EV), a first SECC (SECC_1) to a fifth SECC (SECC_5), a first EVCC (EVCC_1), a second EVCC (EVCC_2), etc., included in an EV, an ACD charger, or a backbone network.

A brief example of an overall guiding-pairing sequence that may be employed in the simultaneous multiple charging method is as following 1. through 5.
1. The CSMS stores user information received from an eMSP and/or vehicle information related to the user information. Based on a pairing completion event occurring, the pairing completion event may be transmitted to all ACDs in a parking site through a pre-established communication network. Here, guiding-pairing refers to pairing for EV guiding and may be distinguished from pairing for EV charging. Guiding-pairing may be briefly referred to as pairing.
2. The SECC controls an LF transponder and may broadcast LF bursts including LF EV ID modulation information. An LF burst refers to a signal packet periodically transmitted for a short time in a low frequency band.
3. A plurality of EVCCs (LF EV transponders) within an LF communication range may respond to the LF bursts and may start a ranging process. The plurality of EVCCs may transmit distance and SECC number information to an SECC.
4. Based on using the method described in the above steps 1 to 3, a closest ACD may be selected, and a pairing process may be started after this step.
5. WLAN connection between an SECC and an EVCC may be performed using active scanning.

Referring to FIG. 5, based on EV1 entering a parking site of a charging station providing a simultaneous multiple charging service, a pairing sequence between EV1 and SECC3 is described in more detail as follows.

It is assumed that a guiding process has already been completed and EV1 is positioned in front of a parking line of a parking site.

Based on a pairing sequence being started, the CSMS may transmit pairing participant information (Pairing_Actor_Info) to a plurality of SECCs (SECC_2, SECC_3, SECC_4) around EV1 in step S510. The pairing participant information may include an EV ID, an EVCC ID, and EV-side LF information (LF EV).

Each of the plurality of SECCs (SECC_2, SECC_3, SECC_4) may transmit an LF verification (LF_Verification) message to a first EVCC of EV1 based on the pairing participant information in step S520. The LF verification message may include an LF EV ID.

In addition, each of the plurality of SECCs (SECC_2, SECC_3, SECC_4) may transmit an LF guiding information (LF_Guiding_Info) message to the CSMS in step S530. The LF guiding information may include a distance from each SECC to EV1, a direction, and each SECC number or identifier.

Next, the CSMS may transmit a station list (STA_list) for neighboring stations to a specific SECC (for example, SECC_3) selected based on the LF guiding information in step S540. The station list may include information on a third SECC (SECC_3) and a first EVCC (EVCC_1).

Next, the CSMS, the third SECC, or the first EVCC may identify a closest GU (SECC_3) and may complete verification in step S550. The third SECC or the first EVCC may check a distance between an LF pad (LF_PAD) and an LF EV (LF_EV) by using an LF sensor of EV1 in step S552. The third SECC or the first EVCC may compare an SECC selected by a driver through an application and an SECC for which guiding has been completed in step S554. Based on the third SECC having a shortest distance and being identical to an SECC selected by a user through an application in step S556, the third SECC or the first EVCC may start a WLAN connection sequence in step S558.

Based on the WLAN connection sequence being started, the first EVCC may transmit a probe request (ProbeReq) message to the third SECC in step S560 and may receive a probe response (ProbeRes) message from the third SECC in step S562. The probe request message may include an EVCC ID.

Next, the third SECC receives an association request (AssociationReq) message from the first EVCC in step S570 and may transmit an association response (AssociationRes) message to the first EVCC in step S572.

Through the above-described process, WLAN connection between the first EVCC and the third SECC may be established in step S580. Based on WLAN connection being established, pairing may be completed. Thereafter, a positioning sequence may be started.

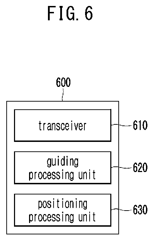

FIG. 6 is a schematic block diagram of an apparatus using a simultaneous multiple charging method according to another exemplary embodiment of the present disclosure.

Referring to FIG. 6, an apparatus using a simultaneous multiple charging method may include a guiding server 600. The guiding server 600 may be coupled to one or more of an electric vehicle supply equipment (EVSE), an automatic EVSE, a ground device, or an SECC, and may be arranged in a form of a means for performing a corresponding function or a component performing a function corresponding to the means.

The guiding server 600 may include a transceiver 610, a guiding processing unit 620, and a positioning processing unit 630.

The transceiver 610 may receive a guiding status request message from a CSMS of a backbone network. The transceiver 610 may correspond to a transceiver described later.

The guiding processing unit 620 starts guiding of an electric vehicle entering a charging station based on a UWB (ultra-wideband) EV ID (identifier) in the guiding status request message and may guide the electric vehicle to in front of a parking region in which an automatic charging device (automatic charging device, ACD) charger is installed.

The positioning processing unit 630 may position electric mobility on an automatic power supply device of an ACD charger within a parking region. The automatic power supply device may correspond to an automatic EVSE (aEVSE).

The guiding processing unit 620 and the positioning processing unit 630 described above may be mounted in at least one processor or controller in a form of software instructions or software modules. That is, the guiding processing unit 620 and the positioning processing unit 630 may be mounted as at least a part of a functional unit or a component of a processor or a controller.

In the following description, a method of automatically performing a process of guiding and positioning an electric vehicle with respect to an ACD-U so that pairing between the ACD-U and the electric vehicle (EV) is enabled is provided.

The present disclosure is different from a conventional technology in which an electric vehicle is manually connected to a designated ACD charging device in a charging station having a plurality of charging spots. In a simultaneous multiple charging scenario according to exemplary embodiments of the present disclosure, each of a plurality of electric vehicles may be automatically connected to designated charging devices. The simultaneous multiple charging scenario may be implemented by performing main steps of standby, guiding, positioning, and pairing in an order described above.

Actors participating in the simultaneous multiple charging scenario may include one or more of an EVSE, an aEVSE (automatic EVSE), a P2PS guiding device, a P2PS positioning device, an AOS (ACD onboard system), a CSMS, an eMSP, a guiding server, etc.

Actors such as a guiding server, a P2PS guiding device, a CSMS, and an eMSP may perform a guiding procedure and a positioning procedure while sharing a message including information such as coordinates of an electric vehicle. Positioning may refer to a process of precisely aligning an electric vehicle with respect to an ACD-U to facilitate docking.

At least one actor among the actors may guide an electric vehicle to in front of an intended parking region (for example, a third parking region) and then align the electric vehicle at a desired position within the parking region through precise positioning, and may be configured to start a pairing procedure based on a comparison result of a guiding result and a positioning result being identical.

In the following exemplary embodiments, a process in which an electric vehicle (hereinafter referred to as "EV1") that is a target of simultaneous multiple charging is parked at any one charging device or charging spot and performs pairing may be illustratively described. A target vehicle (EV) entering a charging station may be guided by a plurality of P2PS guiding devices in the charging station and may be guided to a third parking region (P3) that is an intended parking space.

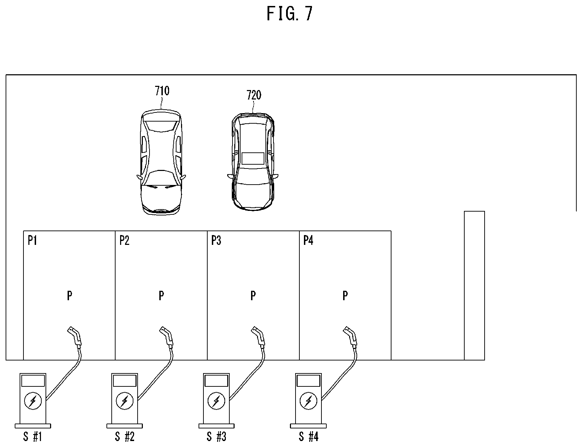

FIG. 7 is an exemplary diagram for explaining a multiple charging method of a comparative example.

Referring to FIG. 7, the multiple charging method of the comparative example is configured to provide a charging service to a plurality of electric vehicles 710 and 720 in an electric vehicle charging environment including a plurality of chargers S#1, S#2, S#3, and S#4 disposed near a plurality of parking regions P1, P2, P3, and P4 of a charging station.

Each of the plurality of electric vehicles 710 and 720 is parked in a desired parking region by a driver. The driver may charge the electric vehicle of the driver through manual connection of coupling a vehicle connector of a charging cable connected to a desired charger to a vehicle inlet.

As described above, the multiple charging method of the comparative example may be included in a category of multiple charging because each of the plurality of electric vehicles 710 and 720 proceeds with charging through manual connection of the driver in a parking region of a charger designated by the driver, but performing simultaneous multiple charging is difficult.

Here, simultaneous multiple charging refers to a method of automatically guiding, positioning, and pairing a vehicle with an ACD-U. Infrastructure, a guiding method, a positioning method, a pairing method, etc., for simultaneous multiple charging are required for simultaneous multiple charging.

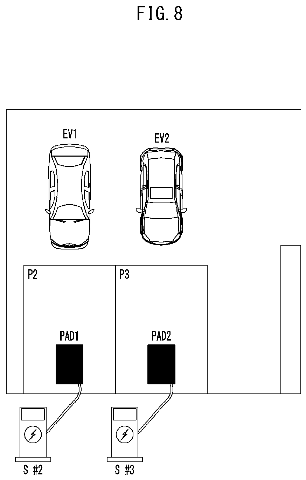

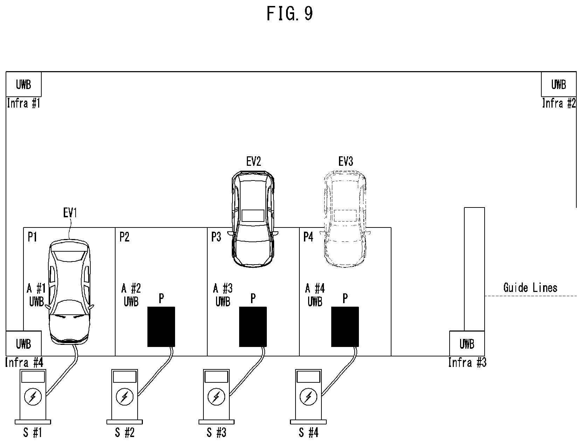

FIG. 8 is an exemplary diagram for explaining an operating environment of a simultaneous multiple charging method according to exemplary embodiments of the present disclosure. FIG. 9 is an exemplary diagram for explaining another operating environment of a simultaneous multiple charging method according to exemplary embodiments of the present disclosure.

Referring to FIG. 8 and FIG. 9, the simultaneous multiple charging method is configured so that multiple electric vehicles EV1, EV2, and EV3 may charge through designated ACD chargers S#1, #1, S#2, S#3, and S#4 without collision in a relatively large charging infrastructure. Each of the ACD chargers includes pads installed in each of parking regions P1, P2, P3, and P4. Infrastructure UWB sensors (UWB infra #1, #2, #3, and #4), which are infrastructure-side sensors, may be disposed around a designated space or the parking regions P1, P2, P3, and P4 of a charging station.

A method of selecting an automatic EVSE in the simultaneous multiple charging method may be basically implemented by obtaining information generated when a driver manually selects a parking region through an application in an in-vehicle infotainment (IVI) or an application of a portable device, or automatically identifying a parking region intended by the driver using a guiding technique. The IVI may also be referred to as an IVI system.

Hereinafter, infrastructure (configuration), a guiding method, a positioning method, a pairing method, etc., for performing the simultaneous multiple charging of the present exemplary embodiments are described in detail by example.

Infrastructure for performing simultaneous multiple charging (simultaneous multiple charging infrastructure) may include, as actors of a configuration for simultaneous multiple charging, a charging station management system (CSMS), an e-mobility service provider (eMSP), and a guiding server that manages a guiding function.

In addition, the infrastructure may include, as actors, an EV supply equipment (EVSE), an automatic EVSE, P2PS guiding for guiding each of infrastructure and an EV, P2PS positioning for positioning each of the infrastructure and the EV, a supply equipment communication controller (SECC), an electric vehicle communication controller (EVCC), an ACD onboard system (AOS), etc. Each of the P2PS guiding and the P2PS positioning may be referred to as a P2PS guiding device and a P2PS positioning device.

P2PS (peer to peer signaling) is one of communication methods using a low frequency (LF) magnetic field signal and/or a low power excitation (LPE) signal.

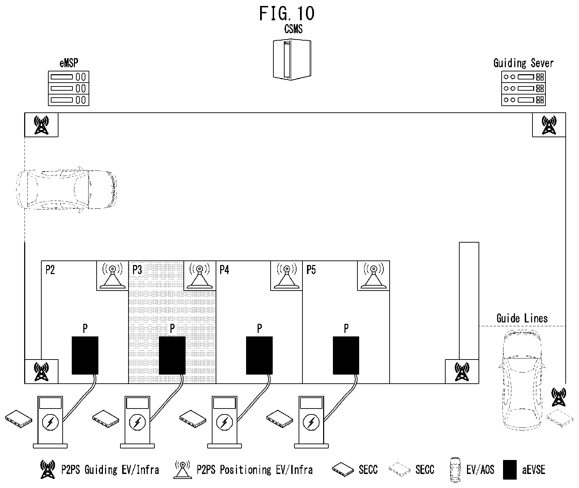

FIG. 10 to FIG. 14 are exemplary diagrams for explaining a guiding sequence that may be employed in a simultaneous multiple charging method according to exemplary embodiments of the present disclosure.

Referring to FIG. 10, infrastructure including a charging station may perform a guiding sequence of guiding a plurality of vehicles entering the charging station to in front of a specific parking space. That is, the guiding sequence may mean guiding an EV entering the inside of the charging station past a guide line of the charging station to in front of a designated/intended parking space.

In the present exemplary embodiments, a simultaneous multiple charging method in which a plurality of electric vehicles simultaneously perform charging at a plurality of chargers is provided.

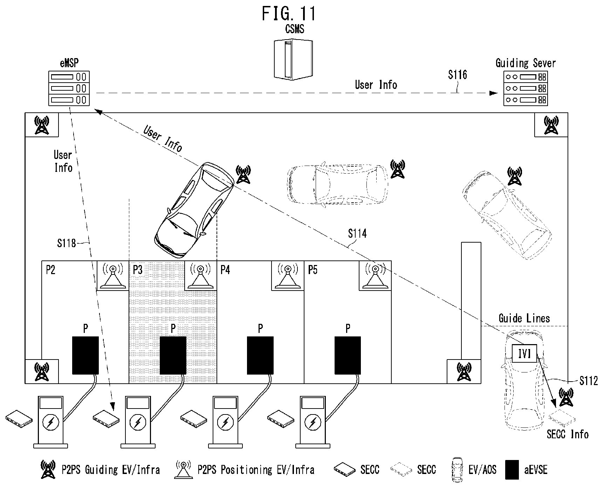

Referring to FIG. 11, an application (App) on a first electric vehicle EV1 side mounted with an IVI may transmit SECC information (SECC info) to EVCC1 in EV1 in step S112. The SECC information may include an SECC ID, for example, an identifier of a third SECC (SECC_3_ID), to guide EV1 to a third parking region P3. For example, the third SECC may be an SECC of a third EVSE installed in a parking region selected by an EV1 user side or designated/determined by an infrastructure side.

In addition, the application on the EV1 side may transmit user information (User Info) to the eMSP in step S114. The user information may include a user ID (for example, User_1_ID) and an SECC ID as basic user information or first user information.

Next, the eMSP may transmit user information to the guiding server in step S116. At this time, the user information is different from the basic user information. The user information is information for guiding EV1 and may include an EV ID of EV1, an EVCC ID, the previously obtained SECC ID, a P2PS guiding EV ID, and a P2PS positioning EV/AOS ID. Such user information may be referred to as guiding user information or second user information.

Next, the eMSP may transmit the second user information to the third SECC in step S118.

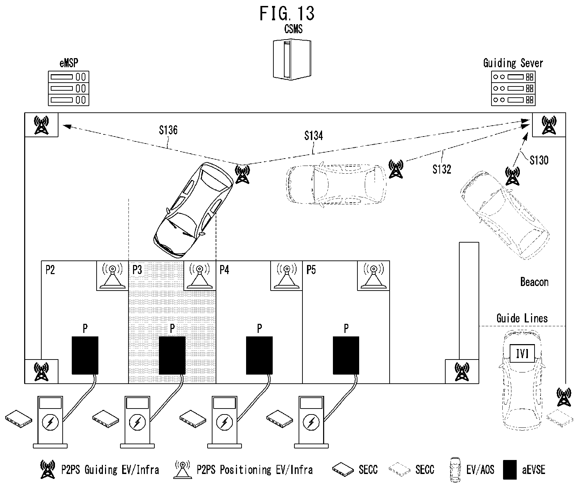

Thereafter, the guiding server and the CSMS may perform P2PS communication with a P2PS guiding device of EV1 identified based on the second user information and may guide EV1 to the third parking region P3 in which the third SECC is installed (see FIG. 13).

Meanwhile, the guiding sequence for guiding EV1 of the present exemplary embodiments may further include a beacon-based guiding procedure that may be selectively used by replacing the guiding procedure described with reference to FIG. 11.

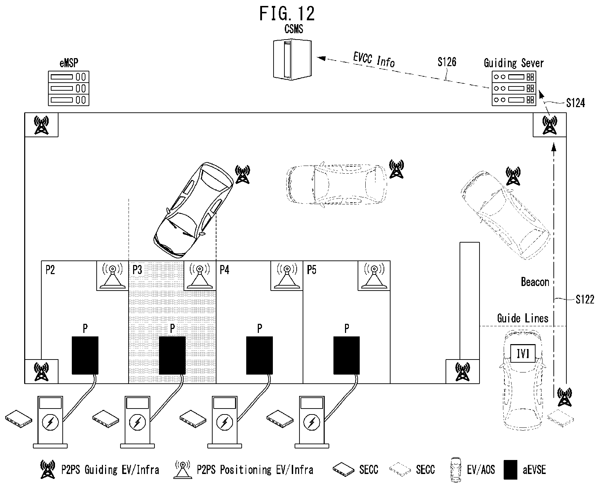

Referring to FIG. 12, an EV entering the inside of a charging station past a guide line of the charging station (for example, "EV1") may transmit a P2PS beacon to a charging station/infrastructure-side P2PS guiding device through an EV-side P2PS guiding device mounted in EV1 in step S122. The P2PS beacon may be configured to transmit a broadcast signal at a specific interval, but is not limited thereto. The P2PS beacon may include an EVCC ID (for example, EVCC_1_ID), which is an identifier of a first EVCC mounted in EV1.

The P2PS beacon supports direct communication between devices without a central server and may be utilized for communication such as vehicle-to-charger (V2G), vehicle-to-vehicle (V2V), vehicle-to-infrastructure (V2I), etc. The P2PS beacon may be used to measure a distance to a charger or an EV through UWB-based ranging or to precisely measure a short-range distance by being used together with an LF signal. In addition, the P2PS beacon may perform automatic pairing and authentication between EV1 and an ACD charger and may be used to check availability of a parking space and a charging station in real time. In addition, the P2PS beacon may be used for an EV entering the inside of a charging station to automatically search for a charger or a parking space as in the present exemplary embodiments.

Next, the infrastructure-side P2PS guiding device may check the EVCC ID. For this purpose, the infrastructure-side P2PS guiding device may transmit the EVCC ID to the guiding server in step S124.

Next, the guiding server may transmit EVCC information including the EVCC ID to the CSMS in step S126.

Thereafter, based on a P2PS signal or a P2PS beacon transmitted from the EV-side P2PS guiding device according to movement of EV1, the guiding server and the CSMS connected to the infrastructure-side P2PS guiding device may share data through websocket communication and may guide the EV (see FIG. 13).

According to the configuration of the present exemplary embodiments, EVCC information is transmitted from the EV-side P2PS guiding device to the CSMS through the P2PS beacon, whereby the CSMS may recognize EV1 that is to proceed with charging and may guide EV1 to in front of a designated parking region or a parking space in which a designated SECC is installed in cooperation with the guiding server.

The above-described EV-side P2PS guiding device may be referred to as a first P2PS guiding device, and the infrastructure-side P2PS guiding device may be referred to as a second P2PS guiding device.

Meanwhile, in order to guide EV1 to in front of a designated parking region or a parking space in which a designated SECC is installed, the first P2PS guiding device and/or the second P2PS guiding device may measure a distance and a direction at a measurement time based on a P2PS signal that changes according to movement of EV1 as shown in FIG. 13 in steps S130, S132, S134, and S136. A ranging result may be transmitted from the second P2PS guiding device to the guiding server.

The ranging result may include information for updating guiding coordinates. Update guiding coordinate (Update_Guiding_Coord) information may include an X-coordinate, a Y-coordinate, and an EVCC ID.

The guiding server and/or the CSMS may include a two-dimensional map of a service region of the charging station, may specify a position of EV1 based on positions of second P2PS guiding devices designated in the two-dimensional map, and may guide movement of EV1.

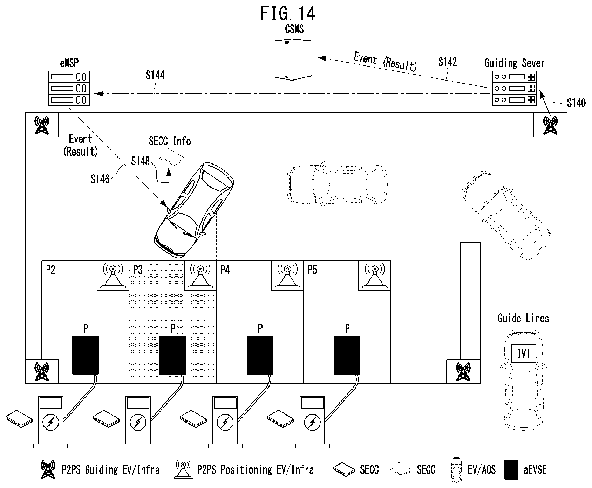

After performing some of the above-described guiding procedures, the guiding server may transmit update guiding coordinate (Update_Guiding_Coord) information to the second P2PS guiding device as shown in FIG. 14 in step S140. At this time, the guiding server may transmit the update guiding coordinate information to the CSMS and the eMSP, respectively.

Next, based on the guiding sequence being completed, the guiding server may transmit an event result for guiding completion to the CSMS and the eMSP, respectively, in steps S142 and S144.

Next, the eMSP may transmit the event result to the IVI of EV1 in step S146. The IVI may transmit SECC information (SECC Info) to the EVCC of EV1. The SECC information may include an identifier (SECC_3_ID) for a target third SECC.

According to the present exemplary embodiments, an EV that has passed the guide line of the charging station may be automatically guided to in front of a parking space in which a designated SECC is installed according to the guiding sequence. Such a guiding sequence may be performed simultaneously for a plurality of electric vehicles.

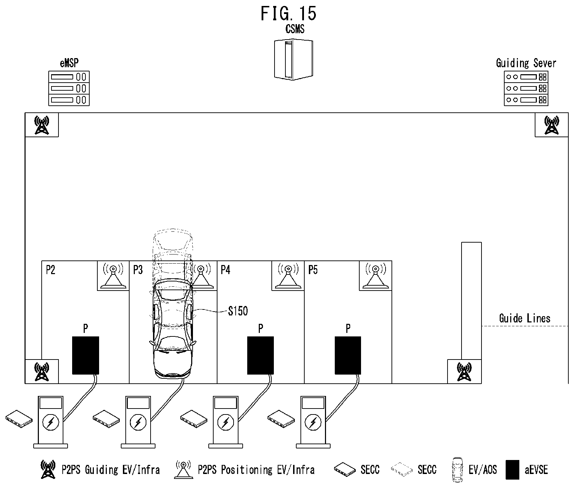

FIG. 15 to FIG. 17 are exemplary diagrams for explaining a positioning sequence that may be employed in a simultaneous multiple charging method according to exemplary embodiments of the present disclosure.

Referring to FIG. 15, the positioning sequence means aligning an ACD-U so that an LF device (LF_EV) of an EV and an LF device (LF_PAD) of an infrastructure-side PAD are docked with each other after a guiding procedure. For this purpose, the EV 150 may be precisely moved to a desired position inside a third parking region P3.

Coordinate information used in a positioning process and/or operations of various auxiliary devices supporting positioning may be included. For example, in the third parking region P3, a frequency source, an EVSE, and an ACD device functioning as a frequency source of a vehicle each have different position information, and thus position and direction information of the vehicle may be precisely recognized using the frequency source, the EVSE, and the ACD device. Precise positioning may be performed based on the precisely recognized position and direction information of the vehicle. The recognized position and direction information of the vehicle may include position and direction information of the vehicle with respect to the EVSE or the ACD device on the EVSE side.

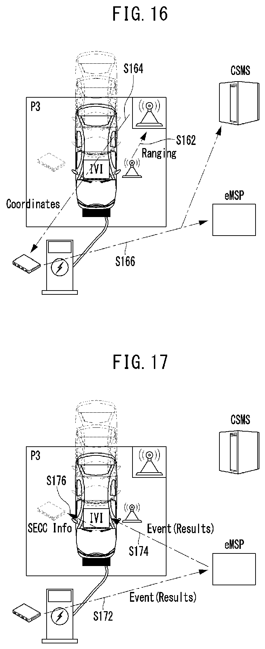

Referring to FIG. 16, in order to move the EV to a desired position of the third parking region P3, a P2PS positioning device of an EV/AOS may transmit a P2PS verification message to an automatic EVSE (automatic EVSE, aEVSE) having an external appearance in a form of a pad and installed in the third parking region P3 in step S162. The P2PS positioning device of the EV/AOS may be referred to as a first P2PS positioning device. The P2PS verification message may include an ID of the first P2PS positioning device.

In addition, the first P2PS positioning device may perform ranging with the automatic EVSE based on a P2PS signal together with transmission of the P2PS verification message in step S162.

The automatic EVSE may transmit coordinate information obtained through the P2PS verification message to a third SECC of an ACD charger installed in the third parking region P3 in step S164.

The third SECC may transmit a positioning coordinate update message including the coordinate information to the eMSP in step S166. The coordinate information or the positioning coordinate update message may include an X-coordinate, a Y-coordinate, and an EVCC ID.

Based on positioning being completed, as shown in FIG. 17, the third SECC may transmit a state message for positioning completion (for example, OnPositioningComplete) to the CSMS and the eMSP in step S172. The state message for positioning completion may include an EVCC ID and an SECC ID.

The eMSP may transmit an event result (Event(Results)) to an IVI or an application of EV1 in step S174. The event result may include a positioning result. The positioning result may include an EVCC ID and an SECC ID.

The IVI or the application of EV1 may transmit SECC information (SECC Info) to an EVCC (EVCC_1) of EV1 in step S176. The SECC information may include a third SECC ID (SECC_3_ID).

According to the present exemplary embodiments, positioning of EV1 may be performed by the first P2PS positioning device performing P2PS verification and ranging with the automatic EVSE based on a P2PS signal, transmitting coordinate information obtained through the P2PS verification and the ranging to the third SECC of the ACD charger installed in the third parking region P3, and the third SECC transmitting a positioning coordinate update message including the coordinate information to the eMSP.

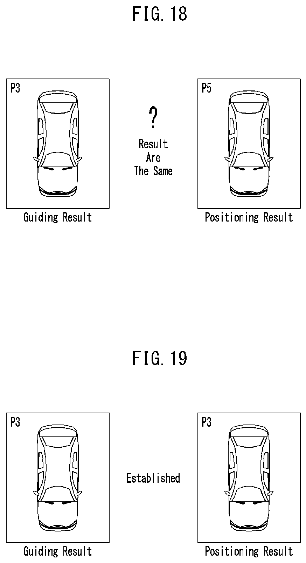

FIG. 18 and FIG. 19 are exemplary diagrams for explaining an introduction part of a pairing sequence that may be employed in a simultaneous multiple charging method according to exemplary embodiments of the present disclosure.

Referring to FIG. 18, after a guiding procedure and a positioning procedure, in order to pair a selected SECC and an EVCC, an EV or an EVSE may determine whether a guiding result and a positioning result are identical to each other.

In a case in which the guiding result guides an EV to a third parking region P3 and the positioning result performs positioning of the EV in a fifth parking region P5, because the guiding result and the positioning result are not identical to each other, the EV or the EVSE may proceed to an error processing stage without proceeding to a pairing sequence.

Meanwhile, as shown in FIG. 19, in a case in which the guiding result guides an EV to the third parking region P3 and the positioning result performs positioning of the EV in the third parking region P3, because the guiding result and the positioning result are identical to each other, the EV or the EVSE may start a pairing procedure between the SECC and the EVCC based on the SECC ID and the EVCC ID already known through the guiding result and the positioning result. The pairing procedure may be set according to the ISO 15118-8 standard.

At least a part of a process of a simultaneous multiple charging method according to exemplary embodiments of the present disclosure or a charging communication method for the method may be executed by a computing system. The computing system may be a type of an apparatus using the simultaneous multiple charging method.

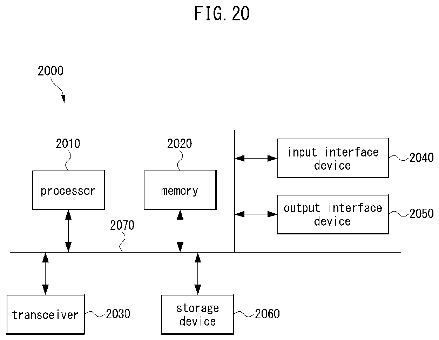

FIG. 20 is a conceptual block diagram of an apparatus using a simultaneous multiple charging method according to another exemplary embodiment of the present disclosure.

Referring to FIG. 20, a computing system 2000, which is a type of an apparatus using a simultaneous multiple charging method, may include at least one processor 2010 and a memory 2020 storing instructions that instruct the at least one processor 2010 to perform at least one step. The computing system 2000 may further include one or more of a transceiver 2030, an input interface device 2040, an output interface device 2050, or a storage device 2060. Components of the computing system 2000 may be connected to each other by a common bus 2070 or may be connected to the processor 2010 through a dedicated bus to perform communication with each other.

The computing system 2000 may execute at least a part of steps of a method according to the present exemplary embodiments by the at least one processor 2010 loading instructions from the memory 2020.

The processor 2010 may refer to a central processing unit (CPU), a graphics processing unit (GPU), or a dedicated processor in which a method according to exemplary embodiments of the present disclosure is performed.

Each of the memory 2020 or the storage device 2060 may be configured with at least one of a volatile storage medium or a non-volatile storage medium. For example, the memory 2020 may be configured with at least one of a read only memory (ROM) or a random access memory (RAM).

The transceiver 2030 may include a communication interface or a sub communication system that performs communication through a wireless network.

In addition, an electric vehicle communication controller (EVCC, Electric Vehicle Communication Controller) that may be adopted as the computing system 2000 according to the present exemplary embodiments may include a processor 2010 that is disposed or mounted in an electric vehicle and is associated with a secondary assembly receiving power from a primary assembly, and that receives at least one command from a memory and executes the at least one command.

In addition, a supply equipment communication controller (SECC, Supply Equipment Communication Controller) that may be adopted as the computing system 2000 according to the present exemplary embodiments may include a processor 2010 that is associated with a primary assembly transmitting power to electric mobility and receives at least one command from a memory and executes the at least one command.

In addition, an apparatus including the processor 2010 according to the present exemplary embodiments may be, for example, a communicable desktop computer, a laptop computer, a notebook, a smart phone, a tablet PC, a mobile phone, a smart watch, a smart glass, an e-book reader, a PMP (portable multimedia player), a portable game device, a navigation device, a digital camera, a DMB (digital multimedia broadcasting) player, a digital audio recorder, a digital audio player, a digital video recorder, a digital video player, a PDA (Personal Digital Assistant), etc.

Meanwhile, although the above-described exemplary embodiments have been described focusing on a method in which an electric vehicle or an EVCC first transmits a request, a message, or a parameter for initiating a communication protocol or a communication session in the protocol to an EVSE/SECC/ACD, the present disclosure is not limited to a specific exemplary embodiment, and it is also possible that an EVSE/SECC/ACD first transmits a request, a message, or a parameter for initiating a communication protocol or a communication session in the protocol to an electric vehicle or an EVCC. For example, it is apparent that substantially identical features are provided except that a sender and a receiver are interchanged.

Operations of a method according to exemplary embodiments of the present disclosure may be implemented as a program or code readable by a computer on a computer-readable recording medium. The computer-readable recording medium includes all kinds of recording devices in which information readable by a computer system is stored. In addition, the computer-readable recording medium may be distributed in a computer system connected through a network so that a program or code readable by a computer may be stored and executed in a distributed manner.

In addition, the computer-readable recording medium may include a hardware device specially configured to store and execute program instructions, such as a ROM, a RAM, a flash memory, etc. The program instructions may include not only machine language code generated by a compiler but also high-level language code executable by a computer using an interpreter, etc.

Some aspects of the present disclosure have been described in a context of an apparatus, but such aspects may also represent description according to a corresponding method, and in this case, a block or a device corresponds to a method step or a feature of a method step. Similarly, aspects described in a context of a method may also be represented as a corresponding block or an item or a feature of a corresponding apparatus. Some or all of method steps may be performed by (or using) a hardware device such as, for example, a microprocessor, a programmable computer, or an electronic circuit. In some exemplary embodiments, at least one of most important method steps may be performed by such a device.

In exemplary embodiments, a programmable logic device (for example, a field-programmable gate array) may be used to perform some or all of functions of methods described herein. In exemplary embodiments, a field-programmable gate array may operate together with a microprocessor to perform one of methods described herein. In general, methods are preferably performed by any hardware device.

Although the present disclosure has been described with reference to preferred exemplary embodiments, a person skilled in the art may understand that the present disclosure may be variously modified and changed without departing from the spirit and scope of the present disclosure defined in the following claims.

## Claims

1. A simultaneous multiple charging method of electric mobility by a charging station management system (CSMS) of a backbone network, the simultaneous multiple charging method comprising:
guiding electric mobility entering a charging station to in front of a parking region in which an automatic charging device (ACD) charger is installed; and
positioning the electric mobility on an automatic power supply device of the ACD charger within the parking region;
wherein the guiding is performed based on user information obtained through an e-mobility service provider (eMSP) from an electric mobility side.

2. The simultaneous multiple charging method of claim 1, wherein the guiding and the positioning are independently performed with respect to a plurality of electric mobilities entering the charging station.

3. The simultaneous multiple charging method of claim 1, further comprising:
receiving the user information and vehicle information from the eMSP,
wherein the electric mobility includes an electric vehicle (EV), and
the user information includes an electric vehicle identification number (EVID), an electric vehicle communication controller (EVCC) identifier (ID), a UWB (ultra-wideband) EV ID, and an LF (low frequency) EV ID.

4. The simultaneous multiple charging method of claim 1, further comprising:
transmitting the user information to a guiding server installed in a parking lot of the charging station.

5. The simultaneous multiple charging method of claim 4, further comprising:
receiving, from the guiding server, a state update message for a state update of data related to the electric mobility,
wherein the state update message triggers a guiding sequence for the electric mobility.

6. The simultaneous multiple charging method of claim 5, further comprising:
transmitting a guiding state request message for the electric mobility to the guiding server.

7. The simultaneous multiple charging method of claim 1, further comprising:
transmitting, to an electric vehicle supply equipment (electric vehicle supply equipment, EVSE) of the charging station, information on an ACD charger or a supply equipment communication controller (SECC) closest to the electric mobility through a UWB guiding result for the electric mobility.

8. The simultaneous multiple charging method of claim 1, further comprising:
transmitting pairing participant information to a plurality of supply equipment communication controllers (SECC) respectively provided in the ACD charger through websocket communication.

9. A simultaneous multiple charging method of electric mobility by a guiding server installed in a charging station, the simultaneous multiple charging method comprising:
guiding electric mobility entering the charging station to in front of a parking region in which an automatic charging device (ACD) charger is installed; and
positioning the electric mobility on an automatic power supply device of the ACD charger within the parking region;
wherein the guiding is started by a guiding state request message received from a charging station management system (CSMS) of a backbone network.

10. The simultaneous multiple charging method of claim 9, wherein the electric mobility includes an electric vehicle (EV),
the guiding state request message includes a UWB (ultra-wideband) EV ID (identifier), and
the UWB EV ID is included in a packet for processing a state request and a response between an EV and an ACD charger in a UWB-based guiding system.

11. The simultaneous multiple charging method of claim 9, further comprising:
verifying the UWB EV ID included in the guiding state request message.

12. The simultaneous multiple charging method of claim 9, further comprising:
guiding the electric mobility by communicating with an infrastructure anchor or a guiding anchor installed in the parking region,
wherein the guiding anchor includes an infrastructure-side UWB device, and
the infrastructure-side UWB device guides the electric mobility to in front of a specific parking region in cooperation with an EV-side UWB device.

13. The simultaneous multiple charging method of claim 9, further comprising:
transmitting a guiding state response message to the charging station management system (CSMS) of the backbone network,
wherein the guiding state response message includes state information on a progress state of a current guiding sequence for the electric mobility.

14. The simultaneous multiple charging method of claim 13, further comprising:
receiving, from the CSMS, a guiding state request message having the same UWB EV ID; and
transmitting, to the CSMS, a guiding state response message including state information on a progress state of the current guiding sequence.

15. The simultaneous multiple charging method of claim 9, further comprising:
transmitting a state message for completion of a guiding sequence for the electric mobility to the CSMS,
wherein the CSMS transmits pairing participant information to a plurality of supply equipment communication controllers (SECC) respectively provided in the ACD charger through websocket communication.

16. An apparatus using a simultaneous multiple charging method of electric mobility, comprising:
a transceiver configured to perform websocket communication with a charging station management system (CSMS); and
a processor connected to the transceiver,
wherein the processor receives a guiding state request message from the CSMS, starts guiding of electric mobility entering a charging station based on a UWB (ultra-wideband) EV ID (identifier) in the guiding state request message, guides the electric mobility to in front of a parking region in which an automatic charging device (ACD) charger is installed, and positions the electric mobility on an automatic power supply device of the ACD charger within the parking region.

17. The apparatus of claim 16, wherein the processor further performs guiding the electric mobility by communicating with an infrastructure anchor or a guiding anchor installed in the parking region,
wherein the electric mobility includes an electric vehicle (electric vehicle, EV),
the guiding anchor includes an infrastructure-side UWB device, and
the infrastructure-side UWB device guides the electric mobility to in front of a specific parking region in cooperation with an EV-side UWB device.

18. The apparatus of claim 16, wherein the processor further performs transmitting a guiding state response message to the CSMS, receiving, from the CSMS, a guiding state request message having the same UWB (ultra-wideband) EV ID (identifier), and transmitting, to the CSMS, a guiding state response message including state information on a progress state of a current guiding sequence,
wherein the UWB EV ID is included in a packet for processing a state request and a response between an EV and an ACD charger in a UWB-based guiding system.

19. The apparatus of claim 16, wherein the processor further performs transmitting a state message for completion of a guiding sequence for the electric mobility to the CSMS,
wherein the CSMS transmits pairing participant information to a plurality of supply equipment communication controllers (SECC) respectively provided in the ACD charger through websocket communication.

20. The apparatus of claim 16, wherein the guiding of the electric mobility is performed based on user information transmitted to the CSMS through an e-mobility service provider (eMSP) from an electric mobility side.
